(19) **Europäisches Patentamt / European Patent Office / Office européen des brevets**

(11) **EP 3 988 333 B1**

(12) **EUROPEAN PATENT SPECIFICATION**

(45) Date of publication and mention
of the grant of the patent:
**20.03.2024 Bulletin 2024/12**

(21) Application number: **21202480.6**

(22) Date of filing: **13.10.2021**

(51) International Patent Classification (IPC):
**B60C 11/00** *(2006.01)* **B60C 19/00** *(2006.01)*
**B60C 19/12** *(2006.01)* **B60C 9/00** *(2006.01)*

(52) Cooperative Patent Classification (CPC):
**B60C 11/0041; B60C 19/002; B60C 19/122;**
B60C 2009/0071; B60C 2011/0025;
B60C 2011/0033

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.10.2020 JP 2020178971**

(43) Date of publication of application:
**27.04.2022 Bulletin 2022/17**

(73) Proprietor: **Sumitomo Rubber Industries, Ltd.**
**Kobe-shi, Hyogo-ken 651-0072 (JP)**

(72) Inventors:
• **OKAMOTO, Jun**
**Kobe-shi, Hyogo 651-0072 (JP)**

• **YAMADA, Ayuko**
**Kobe-shi, Hyogo 651-0072 (JP)**
• **FUJI, Daichi**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 0 620 129      EP-A1- 3 663 102**
**WO-A1-2018/094026    WO-A1-2019/220680**
**WO-A1-2019/221874**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the Invention

The present invention relates to a pneumatic tire.

Description of the Background Art

Conventionally, a pneumatic tire having a porous sound damper disposed on a tire inner cavity surface has been known (see, for example, JP 2005-262920 A, EP 3 663 102 A1, WO 2019/221874 A1 or WO 2018/094026 A1).
In order to improve the durability of the tire and the sound damper, a method of setting the length in the tire axial direction of the sound damper to be small is effective. However, as the length in the tire axial direction of the sound damper becomes smaller, the sound-damping effect of the sound damper decreases.
The present invention has been made in view of the above circumstances, and a main object of the present invention is to provide a pneumatic tire that can have enhanced durability of the tire and a sound damper while maintaining a sufficient sound-damping effect.

SUMMARY OF THE INVENTION

The present invention is directed to a pneumatic tire including: a pair of bead cores; a carcass layer including a carcass ply extending on and between the pair of bead cores through a tread portion and a pair of sidewall portions; a belt layer disposed outward of the carcass layer in a tire radial direction; a tread rubber disposed outward of the belt layer in the tire radial direction; an inner liner rubber layer disposed on a tire inner cavity side of the carcass layer; and a porous sound damper disposed on the tire inner cavity side of the inner liner rubber layer at the tread portion, wherein in a normal state where the pneumatic tire is fitted on a normal rim and inflated to a normal internal pressure and no load is applied to the pneumatic tire, a length W1 in a tire axial direction of the sound damper is smaller than a distance H in the tire radial direction from a bead base line to a maximum width position in an inner cavity surface of the sidewall portion, in a region in the tire axial direction where the sound damper is provided, the tread portion includes a plurality of rubber layers each having a larger thickness than the inner liner rubber layer, including no cord and stacked in the tire radial direction, and, as for a hardness of each rubber layer, the hardness of the rubber layer located more inward in the tire radial direction is smaller.
In the pneumatic tire according to the present invention, the length W1 in the tire axial direction of the sound damper is preferably not greater than 50% of a tread ground-contact width TW.
In the pneumatic tire according to the present invention, the length W1 in the tire axial direction of the sound damper is preferably not greater than 40% of the tread ground-contact width TW.
In the pneumatic tire according to the present invention, a hardness Ho of the rubber layer disposed on an outermost side in the tire radial direction among the rubber layers is preferably not less than 105% of a hardness Hi of the rubber layer disposed on an innermost side in the tire radial direction among the rubber layers.
In the pneumatic tire according to the present invention, the length W1 in the tire axial direction of the sound damper, the tread ground-contact width TW, the hardness Ho of the rubber layer disposed on the outermost side in the tire radial direction among the rubber layers, and the hardness Hi of the rubber layer disposed on the innermost side in the tire radial direction among the rubber layers preferably satisfy a relationship of $(W1/TW)/(Ho/Hi) \leq 0.5$.
In the pneumatic tire according to the present invention, the length W1, the tread ground-contact width TW, the hardness Ho, and the hardness Hi preferably satisfy a relationship of $(W1/TW)/(Ho/Hi) \leq 0.4$.
In the pneumatic tire according to the present invention, the length W1, the tread ground-contact width TW, the hardness Ho, and the hardness Hi preferably satisfy a relationship of $(W1/TW)/(Ho/Hi) \leq 0.3$.
In the pneumatic tire according to the present invention, the length W1 in the tire axial direction of the sound damper is preferably not greater than 150 mm.
In the pneumatic tire according to the present invention, the length W1 is preferably not greater than 100 mm.
In the pneumatic tire according to the present invention, a length H1 in the tire radial direction of the sound damper is preferably not greater than 50 mm.
In the pneumatic tire according to the present invention, the length H1 is preferably not greater than 30 mm.
In the pneumatic tire according to the present invention, a loss tangent tanδ at 0°C and a loss tangent tanδ at 30°C of the rubber layer disposed on the outermost side in the tire radial direction among the rubber layers as measured according to the standards of JIS K 6394 at a frequency of 10 Hz, an initial elongation strain of 10 %, and a dynamic strain amplitude of ±2 % using a viscoelasticity spectrometer preferably satisfy a relationship of 0°C tanδ/30°C tanδ≤3.

In the pneumatic tire according to the present invention, the loss tangent tan$\delta$ at 0°C and the loss tangent tan$\delta$ at 30°C preferably satisfy a relationship of 0°C tan$\delta$/30°C tan$\delta$≤2.

In the pneumatic tire according to the present invention, preferably, each rubber layer contains a filler component measured as ash by thermogravimetric analysis of a vulcanized rubber according to JIS K 6226-1:2003 and a plasticizer component measured as an acetone extract according to JIS K 6229:2015, and, as for a ratio of a total amount of the filler component to a total amount of the plasticizer component in each rubber layer, the ratio in the rubber layer located more inward in the tire radial direction is smaller.

Preferably, the pneumatic tire according to the present invention further includes a sealant layer for preventing a puncture, on a tire inner cavity surface, and a hardness of the sealant layer is smaller than a hardness of the inner liner rubber layer.

Since, as for the hardness of each rubber layer, the hardness of the rubber layer located more inward in the tire radial direction is smaller in the pneumatic tire according to the present invention, vibration is attenuated toward the inner side in the tire radial direction. Therefore, even with the sound damper having a small length in the tire axial direction, a sufficient sound-damping effect is obtained. Accordingly, while the sound-damping effect is maintained, the length in the tire axial direction of the sound damper can be decreased, so that the durability of the tire and the sound damper can be enhanced.

BRIEF DESCRIPTION OF THE DRAWINGS

FIG. 1 is a meridian cross-sectional view showing an embodiment of the pneumatic tire according to the present invention; and

FIG. 2 is a meridian cross-sectional view showing a modification of the pneumatic tire in FIG. 1.

DESCRIPTION OF THE PREFERRED EMBODIMENTS

Hereinafter, an embodiment of the present invention will be described with reference to the drawings.

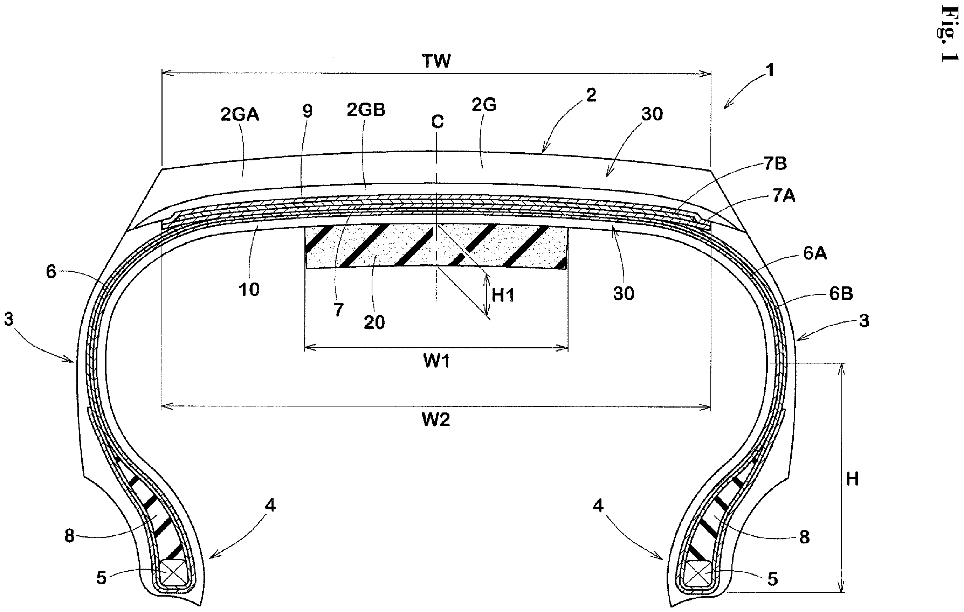

FIG. 1 is a meridian cross-sectional view including a tire rotation axis (not shown) in a normal state of a pneumatic tire 1 according to the present embodiment.

The "normal state" is a state where the pneumatic tire 1 is fitted on a normal rim and inflated to a normal internal pressure and no load is applied to the pneumatic tire 1. In the following, unless otherwise specified, dimensions and the like of components of the pneumatic tire 1 are values measured in the normal state.

The "normal rim" is a rim that is defined, in a standard system including a standard on which the pneumatic tire 1 is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the pneumatic tire 1 is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In the case where the pneumatic tire 1 is for a passenger car, the normal internal pressure may be, for example, 180 kPa.

The pneumatic tire 1 according to the present embodiment is suitably used as a radial tire, for a small truck, having a normal internal pressure of 350 to 600 kPa. The pneumatic tire 1 includes a pair of bead cores 5, a carcass layer 6, a belt layer 7, and a pair of bead apex rubbers 8.

The bead cores 5 are disposed at a pair of bead portions 4. Each bead core 5 is formed, for example, in a polygonal cross-sectional shape in which a bead wire (not shown) made of steel is wound in multiple rows and multiple stages.

The carcass layer 6 includes at least one carcass ply. The carcass ply is formed by, for example, coating an array of carcass cords with a topping rubber. As each of the carcass cords, for example, steel or an organic fiber such as polyester fiber, nylon fiber, rayon fiber, polyethylene naphthalate fiber, or aramid fiber, is used.

The carcass layer 6 of the present embodiment includes a carcass ply 6A and a carcass ply 6B. The carcass layer 6 includes the topping rubbers of the carcass plies 6A and 6B, and a sheet-shaped rubber in the form in which the sheet-shaped rubber is provided between the carcass plies 6A and 6B. The carcass ply 6A is disposed so as to extend on and between the pair of bead cores 5 through a tread portion 2 and a pair of sidewall portions 3. The carcass ply 6B is disposed outward of the carcass ply 6A.

The belt layer 7 is disposed outward of the carcass layer 6 in the tire radial direction. The belt layer 7 includes at least one belt ply. In the present embodiment, the belt layer 7 includes two belt plies 7A and 7B on the inner side and the outer side, respectively, in the tire radial direction. The belt plies 7A and 7B are each formed by, for example, coating an array of belt cords with a topping rubber. The belt cords are arranged in the tire circumferential direction. That is, the belt cords are preferably arranged so as to be inclined, for example, at an angle of 15 to 45° with respect to a tire equator C. The belt cords are preferably highly elastic cords such as steel cords.

Each bead apex rubber 8 is disposed outward of the bead core 5 in the tire radial direction. The bead apex rubber 8 is formed in a substantially triangular cross-sectional shape that is tapered toward the outer side in the tire radial direction.

A band layer 9 may be disposed outward of the belt layer 7 in the tire radial direction. The band layer 9 includes at least one band ply in which organic fiber cords are arranged at a small angle, for example, not greater than 10 degrees, with respect to the tire circumferential direction. The band ply may be obtained by splicing either a jointless band or ply that is formed by spirally winding a band cord or a ribbon-shaped band-like ply.

An inner liner rubber layer 10 is formed inward of the carcass layer 6, that is, on a tire inner cavity surface. The inner liner rubber layer 10 is formed from an air-impermeable rubber and maintains the internal pressure.

A tread rubber 2G is disposed outward of the belt layer 7 and the band layer 9 in the tire radial direction. The tread rubber 2G of the present embodiment includes a cap rubber layer 2GA disposed on the outermost side in the tire radial direction, and a base rubber layer 2GB disposed inward of the cap rubber layer 2GA in the tire radial direction. The tread rubber 2G may be composed of a single rubber layer.

The pneumatic tire 1 according to the present embodiment includes a sound damper 20 on the inner side of the tread portion 2 in the tire radial direction. The sound damper 20 is disposed on the tire inner cavity side of the inner liner rubber layer 10.

The sound damper 20 is composed of, for example, a porous sponge material. The sponge material is a spongy porous structure, and examples of the sponge material include, in addition to a so-called sponge itself having open cells and obtained by foaming a rubber or synthetic resin, a web-like material in which animal fibers, plant fibers, synthetic fibers, or the like are entwined and integrally connected. Moreover, the "porous structure" includes a structure having not only open cells but also closed cells. For the sound damper 20 of this example, an open cell sponge material made of polyurethane is used. Such a sound damper 20 has a hardness smaller than those of a rubber layer 30 and a sealant layer 40, which will be described later.

The sponge material as described above reduces sound (cavity resonance energy) by its surface and inner porous portions converting the vibration energy of vibrating air into heat energy to consume the vibration energy, thereby reducing the running noise of the pneumatic tire 1. In addition, the sponge material is easily deformed, for example, easily contracted and bent, and thus does not substantially affect the deformation of the tire during running. Therefore, deterioration of steering stability can be prevented. Furthermore, the sponge material has a very small specific gravity, and thus can prevent deterioration of the weight balance of the tire.

As the sponge material, synthetic resin sponges such as ether-based polyurethane sponges, ester-based polyurethane sponges, and polyethylene sponges, and rubber sponges such as chloroprene rubber sponges (CR sponges), ethylene-propylene rubber sponges (EPDM sponges), and nitrile rubber sponges (NBR sponges) are suitable for use. In particular, polyethylene sponges, polyurethane sponges including ether-based polyurethane sponges, or the like are preferable from the viewpoint of sound-damping properties, lightness, foam controllability, durability, etc.

The sound damper 20 has a long band shape having a bottom surface fixed to the inner cavity surface of the tread portion 2, and extends in the tire circumferential direction. In this case, the sound damper 20 may be formed in a substantially annular shape by abutting outer end portions in the circumferential direction against each other, or the outer end portions may be separated from each other in the circumferential direction.

The sound damper 20 has substantially the same cross-sectional shape at each position in the circumferential direction except the outer end portions. As this cross-sectional shape, in order to prevent falling-down or deformation of the tire during running, a flat and horizontally long shape having a small height with respect to the width in the tire axial direction is preferable.

In the pneumatic tire 1 in the normal state, a length W1 in the tire axial direction of the sound damper 20 (that is, the width of the sound damper 20) is smaller than a distance H in the tire radial direction from a bead base line to a maximum width position in the inner cavity surface of the sidewall portion 3.

In a region in the tire axial direction where the sound damper 20 is provided, the tread portion 2 includes a plurality of rubber layers 30 laminated in the tire radial direction. Here, the "rubber layer" is intended to be a rubber layer that has a larger thickness than the inner liner rubber layer 10 and that includes no cord. The rubber layers 30 include the tread rubber 2G (cap rubber layer 2GA and base rubber layer 2GB) and the inner liner rubber layer 10. In addition, the rubber layers 30 may include an intermediate rubber layer between the carcass plies 6A and 6B, an intermediate rubber layer between the belt plies 7A and 7B, an intermediate rubber layer between the carcass layer 6 and the belt layer 7, an intermediate rubber layer between the belt layer 7 and the band layer 9, and an intermediate rubber layer between the carcass layer 6 and the inner liner rubber layer 10.

In the pneumatic tire 1, as for the hardness of each rubber layer 30, the hardness of the rubber layer 30 located more inward in the tire radial direction is smaller. For example, the hardness of the base rubber layer 2GB is smaller than the hardness of the cap rubber layer 2GA. In addition, the hardness of the inner liner rubber layer 10 is smaller than the hardness of the base rubber layer 2GB. Due to such a configuration, vibration inputted from the tread surface of the tread portion 2 is attenuated toward the inner side in the tire radial direction. Therefore, even with the sound damper 20 having a small length in the tire axial direction, a sufficient sound-damping effect is obtained.

The sound damper 20 is attached to the inner liner rubber layer 10 by using, for example, an adhesive or the like. However, if the hardness difference between the porous sound damper 20 and the inner liner rubber layer 10 is large, when the pneumatic tire 1 is used for a long period of time, stress may be concentrated at the interface between the porous sound damper 20 and the inner liner rubber layer 10, so that the sound damper 20 may be peeled. In the present embodiment, since the rubber layer 30 located more inward in the tire radial direction has a smaller hardness, the hardness difference between the sound damper 20 and the inner liner rubber layer 10 is small, so that the resistance to peeling of the sound damper 20 can be improved.

The length W1 in the tire axial direction of the sound damper 20 is preferably not greater than 50% of a tread ground-contact width TW. The tread ground-contact width TW is the distance in the tire axial direction between tread ground-contact edges TE1 and TE2 when the normal load is applied to the tire in the normal state and the tire is brought into contact with a flat surface at a camber angle of 0°. With such a sound damper 20, peeling of the sound damper 20 from the inner cavity surface of the tread portion 2 can be suppressed, so that the durability of the pneumatic tire 1 and the sound damper 20 can be easily enhanced. In addition, from the above viewpoint, the length W1 in the tire axial direction of the sound damper 20 is more preferably not greater than 40% of the tread ground-contact width TW.

A hardness Ho of the rubber layer 30 disposed on the outermost side in the tire radial direction (in the present embodiment, the cap rubber layer 2GA) among the rubber layers 30 is preferably not less than 105% of a hardness Hi of the rubber layer 30 disposed on the innermost side in the tire radial direction (in the present embodiment, the inner liner rubber layer 10) among the rubber layers 30. By the rubber layers 30 having such hardnesses, peeling of the sound damper 20 from the inner cavity surface of the tread portion 2 is suppressed.

The hardness Ho of the rubber layer 30 disposed on the outermost side in the tire radial direction among the rubber layers 30 is preferably less than 200% of the hardness Hi of the rubber layer 30 disposed on the innermost side in the tire radial direction among the rubber layers 30. By the rubber layers 30 having such hardnesses, a further sound-damping effect is obtained.

The hardness of each rubber layer 30 can be measured, for example, using a hardness meter having a press needle diameter of 0.5 mm or less. By using such a hardness meter, it is possible to evaluate elasticity that can follow the unevenness of a road surface at the micro level, and a sound-damping effect in actual running can be obtained.

The length W1 in the tire axial direction of the sound damper 20, the tread ground-contact width TW, and the hardnesses Ho and Hi of the rubber layers 30 preferably satisfy the following relationship.

$$(\mathrm{W1/TW})/(\mathrm{Ho/Hi}) \leq 0.5$$

In such a pneumatic tire 1, the durability of the pneumatic tire 1 and the sound damper 20 can be enhanced while a sufficient sound-damping effect is maintained.

Moreover, the relationship between the length W1 in the tire axial direction of the sound damper 20, the tread ground-contact width TW, and the hardnesses Ho and Hi of the rubber layers is more preferably

$$(\mathrm{W1/TW})/(\mathrm{Ho/Hi}) \leq 0.4.$$

The relationship between the length W1 in the tire axial direction of the sound damper 20, the tread ground-contact width TW, and the hardnesses Ho and Hi of the rubber layers is further preferably

$$(\mathrm{W1/TW})/(\mathrm{Ho/Hi}) \leq 0.3.$$

The length W1 in the tire axial direction of the sound damper 20 is preferably not greater than 70% of a length W2 in the tire axial direction of the belt layer 7. With such a sound damper 20, peeling of the sound damper 20 from the inner cavity surface of the tread portion 2 can be suppressed, so that the durability of the pneumatic tire 1 and the sound damper 20 can be easily enhanced.

The length W1 in the tire axial direction of the sound damper 20 is preferably not greater than 150 mm. With such a sound damper 20, peeling of the sound damper 20 from the inner cavity surface of the tread portion 2 can be suppressed, so that the durability of the pneumatic tire 1 and the sound damper 20 can be easily enhanced.

Moreover, from the above viewpoint, the length W1 in the tire axial direction of the sound damper 20 is more preferably not greater than 120 mm and further preferably not greater than 100 mm.

A length H1 in the tire radial direction of the sound damper 20 is preferably not greater than 50 mm. With such a sound damper 20, peeling of the sound damper 20 from the inner cavity surface of the tread portion 2 can be suppressed, so that the durability of the pneumatic tire 1 and the sound damper 20 can be easily enhanced.

Moreover, from the above viewpoint, the length H1 in the tire radial direction of the sound damper 20 is more preferably not greater than 30 mm.

A loss tangent tan$\delta$ at 0°C and a loss tangent tan$\delta$ at 30°C of the rubber layer 30 disposed on the outermost side in the tire radial direction preferably satisfy the following relationship.

$$0°C \tan\delta/30°C \tan\delta \leq 3$$

In such a pneumatic tire 1, the temperature dependence of the sound-damping effect is reduced, and a good sound-damping effect is obtained in a wide temperature range.

Moreover, from the above viewpoint, the relationship between the loss tangent tan$\delta$ at 0°C and the loss tangent tan$\delta$ at 30°C of the rubber layer 30 is more preferably

$$0°C \tan\delta/30°C \tan\delta \leq 2.$$

The loss tangent tan$\delta$ at 0°C and the loss tangent tan$\delta$ at 30°C are values measured according to the standards of JIS K 6394 under the conditions of each measurement temperature (0°C or 30°C), a frequency of 10 Hz, an initial elongation strain of 10%, and a dynamic strain amplitude of $\pm 2\%$ using a viscoelasticity spectrometer manufactured by Iwamoto Seisakusho.

Each rubber layer 30 contains a filler component. Examples of the filler component include carbon black and silica. The filler component is measured, for example, as ash by thermogravimetric analysis (TGA) of a vulcanized rubber according to JIS K 6226-1: 2003.

In the pneumatic tire 1, as for the total amount of the filler component in each rubber layer 30, such a total amount in the rubber layer 30 located more inward in the tire radial direction is preferably smaller. Accordingly, vibration is attenuated toward the inner side in the tire radial direction. Therefore, even with the sound damper 20 having a small length in the tire axial direction, a sufficient sound-damping effect is obtained.

Each rubber layer 30 contains a plasticizer component. Examples of the plasticizer component include oil. The plasticizer component is measured, for example, as an acetone extract according to JIS K 6229: 2015.

In the pneumatic tire 1, as for the total amount of the plasticizer component in each rubber layer 30, such a total amount in the rubber layer 30 located more inward in the tire radial direction is preferably larger. Accordingly, vibration is attenuated toward the inner side in the tire radial direction. Therefore, even with the sound damper 20 having a small length in the tire axial direction, a sufficient sound-damping effect is obtained.

As for the ratio of the total amount of the filler component to the total amount of the plasticizer component in each rubber layer, such a ratio in the rubber layer 30 located more inward in the tire radial direction is preferably smaller. Accordingly, vibration is attenuated toward the inner side in the tire radial direction. Therefore, even with the sound damper 20 having a small length in the tire axial direction, a sufficient sound-damping effect is obtained.

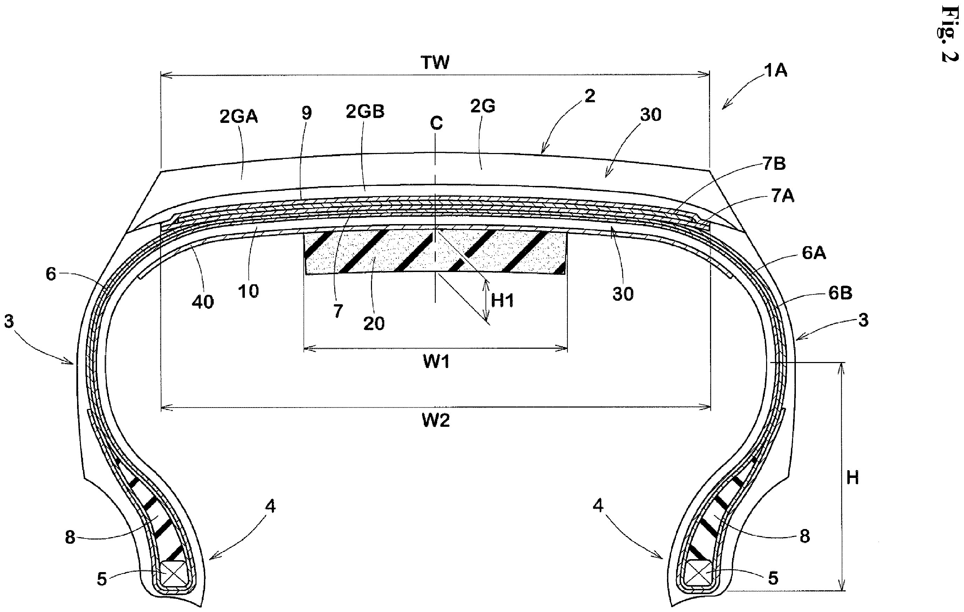

FIG. 2 shows a pneumatic tire 1A which is a modification of the pneumatic tire 1 in FIG. 1. In the pneumatic tire 1A, the configuration of the above-described pneumatic tire 1 can be adopted for the portions that are not described below.

The pneumatic tire 1A further includes the sealant layer 40 for preventing a puncture, on the tire inner cavity surface. The sealant layer 40 is formed on the inner cavity side of the inner liner rubber layer 10. The sound damper 20 is formed on the inner cavity side of the sealant layer 40.

A sealant for forming the sealant layer 40 is not particularly limited, and the sealant of this example contains a rubber component, a liquid polymer, and a crosslinking agent.

As the rubber component, butyl-based rubbers such as isobutylene-isoprene-rubber and halogenated isobutylene-isoprene-rubber are adopted. As the rubber component, a butyl-based rubber and a diene-based rubber can be mixed and used.

Examples of the liquid polymer include liquid polybutene, liquid polyisobutene, liquid polyisoprene, liquid polybutadiene, liquid poly-$\alpha$-olefin, liquid isobutylene, liquid ethylene-$\alpha$-olefin copolymers, liquid ethylene-propylene copolymers, and liquid ethylenebutylene copolymers.

As the crosslinking agent, a known compound can be used, and an organic peroxide is preferable. Use of the butyl-based rubber or the liquid polymer in an organic peroxide crosslinking system improves the adhesiveness, the sealing performance, the fluidity, and processability.

Examples of the organic peroxide (crosslinking agent) include: acyl peroxides such as benzoyl peroxide, dibenzoyl peroxide, and p-chlorobenzoyl peroxide; peroxyesters such as 1-butyl peroxyacetate, t-butyl peroxybenzoate, and t-butyl peroxyphthalate; ketone peroxides such as methyl ethyl ketone peroxide; alkyl peroxides such as di-t-butyl peroxybenzoate and 1,3-bis(1-butylperoxyisopropyl)benzene; hydroperoxides such as t-butyl hydroperoxide; and dicumyl peroxide and t-butylcumyl peroxide. Among these organic peroxides, from the viewpoint of adhesiveness and fluidity, acyl peroxides are preferable, and dibenzoyl peroxide is particularly preferable.

To the sealant material, a crosslinking activator (vulcanization accelerator), an inorganic filler, a plasticizer, etc., can be added as appropriate.

The crosslinking activator (vulcanization accelerator) can be selected from the group consisting of sulfenamide crosslinking activators, thiazole crosslinking activators, thiuram crosslinking activators, thiourea crosslinking activators, guanidine crosslinking activators, dithiocarbamate crosslinking activators, aldehyde-amine crosslinking activators, aldehyde-ammonia crosslinking activators, imidazoline crosslinking activators, xanthate crosslinking activators, quinone dioxime compounds (quinoid compounds), and the like.

The inorganic filler can be selected from the group consisting of carbon black, silica, calcium carbonate, calcium silicate, magnesium oxide, aluminum oxide, barium sulfate, talc, mica, and the like.

The plasticizer can be selected from the group consisting of aromatic process oil, naphthenic process oil, paraffinic process oil, and the like.

A hardness of the sealant layer 40 is preferably smaller than the hardness of the inner liner rubber layer 10. Accordingly, vibration is attenuated toward the inner side in the tire radial direction. Therefore, even with the sound damper 20 having a small length in the tire axial direction, a sufficient sound-damping effect is obtained.

The pneumatic tires 1 and 1A according to the present invention are suitable for a passenger car, and particularly suitable for sizes with a tire width of 155 or more. Among them, sizes with a tire width of 205 or more are preferable, sizes with a tire width of 225 or more are more preferable, and sizes with a tire width of 265 or more are further preferable.

Although the pneumatic tire 1 according to the present invention has been described in detail above, the present invention is not limited to the above specific embodiment, and various modifications can be made to implement the present invention.

EXAMPLES

Pneumatic tires with a size of 195/65R15 having the basic structure in FIG. 1 were produced as sample tires on the basis of specifications in Table 1, and were evaluated for noise performance and durability. The hardness of each rubber layer was measured by pressing a press needle against a tire meridian cross section in a direction perpendicular thereto, using a hardness meter having a press needle diameter of 0.5 mm or less (the same applies below). Of the specifications of each sample tire, those not listed in Table 1 are common. The test methods are as follows.

<Noise Performance>

Noise was measured when a test vehicle on which the sample tires were mounted ran at a speed of 60 km/h. The results are indicated as indexes with the result of Comparative Example 1 being regarded as 100. A higher value indicates that the noise performance is better.

<Durability>

Each sample tire was caused to run for 30,000 km using a drum tester under the conditions of an internal pressure of 230 kPa, a load of 4.24 kN, and a speed of 80 km/h, and the degree of damage to the sound damper after running was checked. The results are indexes with the result of Comparative Example 1 being regarded as 100. A higher value indicates that the durability is better.

[Table 1]

| | Comparative Example 1 | Comparative Example 2 | Comparative Example 3 | Comparative Example 4 | Example 1 |
|---|---|---|---|---|---|
| Sound damper | Presence | Presence | Presence | Presence | Presence |
| Length W1 of sound damper | W1<H | W1<H | W1<H | W1>H | W1<H |
| Hardness of cap rubber layer (°) | 50 | 70 | 70 | 70 | 70 |

(continued)

|  | Comparative Example 1 | Comparative Example 2 | Comparative Example 3 | Comparative Example 4 | Example 1 |
|---|---|---|---|---|---|
| Hardness of base rubber layer (°) | 60 | 70 | 60 | 60 | 60 |
| Hardness of inner liner rubber layer (°) | 70 | 70 | 60 | 50 | 50 |
| Noise performance (index) | 100 | 90 | 110 | 120 | 120 |
| Durability (index) | 100 | 100 | 100 | 90 | 100 |

The blending ingredients (PHR) and the hardnesses of the cap rubber, the base rubber, and the inner liner rubber used in Example 1, etc., are as shown in Table 2.

[Table 2]

|  | Cap rubber layer | Base rubber layer | Inner liner rubber layer |
|---|---|---|---|
| Natural rubber | 40 | 50 | 50 |
| Butadiene rubber | 20 | 50 |  |
| Styrene-butadiene rubber | 40 |  |  |
| Isobutylene-isoprene-rubber |  |  | 50 |
| Carbon black | 70 | 60 | 50 |
| Wax | 3 | 3 |  |
| Antioxidant 6C | 3 | 3 |  |
| Antioxidant RD | 3 | 3 | 3 |
| Process oil | 10 | 10 | 10 |
| Stearic acid | 3 | 3 | 3 |
| Zinc oxide | 3 | 3 | 3 |
| 5%-oil sulfur | 2 | 2 | 2 |
| Vulcanization accelerator NS | 1 | 1 | 1 |
| Vulcanization accelerator DPG | 1 | 1 | 1 |
| Hardness (°) | 70 | 60 | 50 |

The details of each blending ingredient are as follows.

Natural rubber (NR): RSS#1
Butadiene rubber (BR): BR150B manufactured by Ube Industries, Ltd.
Styrene-butadiene rubber (SBR): HPR850 manufactured by JSR Corporation
Isobutylene-isoprene-rubber: Regular Isobutylene-Isoprene-Rubber 268 manufactured by Exxon Mobil Chemical Company
Carbon black: SHOBLACK N550 manufactured by Cabot Japan K.K.
Wax: SUNNOC WAX manufactured by Ouchi Shinko Chemical Industrial Co., Ltd.
Antioxidant 6C: ANTIGENE 6C (N-(1,3-dimethylbutyl)-N'-phenyl-p-phenylenediamine) manufactured by Sumitomo Chemical Company, Limited
Antioxidant RD: NOCRAC 224 manufactured by Ouchi Shinko Chemical Industrial Co., Ltd.
Process oil: Mineral Oil PW-380 manufactured by Idemitsu Kosan Co., Ltd.
Stearic acid: "CAMELLIA" manufactured by NOF Corporation
Zinc oxide: Zinc Oxide Type-1 manufactured by Mitsui Mining & Smelting Co., Ltd.

5% sulfur: powdery sulfur manufactured by Karuizawa Sulfur Co., Ltd.

Vulcanization accelerator: NOCCELER NS (N-tert-butyl-2-benzothiazolyl sulfenamide) manufactured by Ouchi Shinko Chemical Industrial Co., Ltd.

As is obvious from Table 1, it is confirmed that, in the pneumatic tire of Example, the noise performance and the durability are improved in a well-balanced manner as compared to those in each Comparative Example.

Pneumatic tires with the above size having the basic structure in FIG. 1 were produced as sample tires on the basis of specifications in Table 3, and were evaluated for noise performance and durability. Of the specifications of each sample tire, those not listed in Table 3 are common. The test methods are as follows.

<Noise Performance>

Noise was measured in the same manner as above on a test vehicle on which the sample tires were mounted. The results are indicated as indexes with the result of Example 3 being regarded as 100. A higher value indicates that the noise performance is better.

<Durability>

Damage to the sound damper after running was checked in the same manner as above. The results are indicated as indexes with the result of Example 3 being regarded as 100. A higher value indicates that the durability is better.

[Table 3]

|  | Example 2 | Example 3 | Example 4 | Example 5 |
|---|---|---|---|---|
| Sound damper | Presence | Presence | Presence | Presence |
| Length W1 of sound damper | W1<H | W1<H | W1<H | W1<H |
| W1/TW (%) | 60 | 50 | 40 | 30 |
| Hardness of cap rubber layer (°) | 70 | 70 | 70 | 70 |
| Hardness of base rubber layer (°) | 60 | 60 | 60 | 60 |
| Hardness of inner liner rubber layer (°) | 50 | 50 | 50 | 50 |
| Noise performance (index) | 110 | 100 | 90 | 85 |
| Durability (index) | 90 | 100 | 110 | 120 |

Pneumatic tires with the above size having the basic structure in FIG. 1 were produced as sample tires on the basis of specifications in Table 4, and were evaluated for noise performance and durability. Of the specifications of each sample tire, those not listed in Table 4 are common. The test methods are as follows.

<Noise Performance>

Noise was measured in the same manner as above on a test vehicle on which the sample tires were mounted. The results are indicated as indexes with the result of Example 8 being regarded as 100. A higher value indicates that the noise performance is better.

<Durability>

Damage to the sound damper after running was checked in the same manner as above. The results are indicated as indexes with the result of Example 8 being regarded as 100. A higher value indicates that the durability is better.

[Table 4]

|  | Example 6 | Example 7 | Example 8 | Example 9 | Example 10 |
|---|---|---|---|---|---|
| Sound damper | Presence | Presence | Presence | Presence | Presence |
| Length W1 of sound damper | W1<H | W1<H | W1<H | W1<H | W1<H |

(continued)

| | Example 6 | Example 7 | Example 8 | Example 9 | Example 10 |
|---|---|---|---|---|---|
| Hardness of cap rubber layer (°) | 61 | 62 | 70 | 80 | 90 |
| Hardness of base rubber layer (°) | 60 | 60 | 60 | 60 | 60 |
| Hardness of inner liner rubber layer (°) | 59 | 59 | 50 | 40 | 30 |
| Ho/Hi (%) | 103 | 105 | 140 | 200 | 300 |
| Noise performance (index) | 100 | 100 | 100 | 100 | 100 |
| Durability (index) | 80 | 90 | 100 | 110 | 120 |

Pneumatic tires with the above size having the basic structure in FIG. 1 were produced as sample tires on the basis of specifications in Table 5, and were evaluated for noise performance and durability. Of the specifications of each sample tire, those not listed in Table 5 are common. The test methods are as follows.

<Noise Performance>

Noise was measured in the same manner as above on a test vehicle on which the sample tires were mounted. The results are indicated as indexes with the result of Example 13 being regarded as 100. A higher value indicates that the noise performance is better.

<Durability>

Damage to the sound damper after running was checked in the same manner as above. The results are indicated as indexes with the result of Example 13 being regarded as 100. A higher value indicates that the durability is better.

[Table 5]

| | Example 11 | Example 12 | Example 13 | Example 14 | Example 15 |
|---|---|---|---|---|---|
| Sound damper | Presence | Presence | Presence | Presence | Presence |
| Length W1 of sound damper | W1<H | W1<H | W1<H | W1<H | W1<H |
| Hardness of cap rubber layer (°) | 70 | 70 | 70 | 70 | 70 |
| Hardness of base rubber layer (°) | 60 | 60 | 60 | 60 | 60 |
| Hardness of inner liner rubber layer (°) | 50 | 50 | 50 | 50 | 50 |
| (W1/TW)/(Ho/Hi) | 0.8 | 0.5 | 0.4 | 0.3 | 0.2 |
| Noise performance (index) | 70 | 90 | 100 | 100 | 100 |
| Durability (index) | 70 | 90 | 100 | 110 | 120 |

Pneumatic tires with the above size having the basic structure in FIG. 1 were produced as sample tires on the basis of specifications in Table 6, and were evaluated for noise performance and durability. Of the specifications of each sample tire, those not listed in Table 6 are common. The test methods are as follows.

<Noise Performance>

Noise was measured in the same manner as above on a test vehicle on which the sample tires were mounted. The results are indicated as indexes with the result of Example 18 being regarded as 100. A higher value indicates that the noise performance is better.

<Durability>

Damage to the sound damper after running was checked in the same manner as above. The results are indicated as indexes with the result of Example 18 being regarded as 100. A higher value indicates that the durability is better.

[Table 6]

|  | Example 16 | Example 17 | Example 18 | Example 19 |
|---|---|---|---|---|
| Sound damper | Presence | Presence | Presence | Presence |
| Length W1 of sound damper | W1<H | W1<H | W1<H | W1<H |
| Length W1 of sound damper (mm) | 200 | 150 | 100 | 70 |
| Hardness of cap rubber layer (°) | 65 | 65 | 65 | 65 |
| Hardness of base rubber layer (°) | 60 | 60 | 60 | 60 |
| Hardness of inner liner rubber layer (°) | 50 | 50 | 50 | 50 |
| Noise performance (index) | 150 | 130 | 100 | 80 |
| Durability (index) | 70 | 90 | 100 | 120 |

Pneumatic tires with the above size having the basic structure in FIG. 1 were produced as sample tires on the basis of specifications in Table 7, and were evaluated for noise performance and durability. Of the specifications of each sample tire, those not listed in Table 7 are common. The test methods are as follows.

<Noise Performance>

Noise was measured in the same manner as above on a test vehicle on which the sample tires were mounted. The results are indicated as indexes with the result of Example 22 being regarded as 100. A higher value indicates that the noise performance is better.

<Durability>

Damage to the sound damper after running was checked in the same manner as above. The results are indicated as indexes with the result of Example 22 being regarded as 100. A higher value indicates that the durability is better.

[Table 7]

|  | Example 20 | Example 21 | Example 22 | Example 23 |
|---|---|---|---|---|
| Sound damper | Presence | Presence | Presence | Presence |
| Length W1 of sound damper | W1<H | W1<H | W1<H | W1<H |
| Length H1 of sound damper (mm) | 80 | 50 | 30 | 20 |
| Hardness of cap rubber layer (°) | 65 | 65 | 65 | 65 |
| Hardness of base rubber layer (°) | 60 | 60 | 60 | 60 |
| Hardness of inner liner rubber layer (°) | 50 | 50 | 50 | 50 |
| Noise performance (index) | 120 | 110 | 100 | 90 |
| Durability (index) | 80 | 90 | 100 | 120 |

Pneumatic tires with the above size having the basic structure in FIG. 1 were produced as sample tires on the basis of specifications in Table 8, and were evaluated for noise performance. Of the specifications of each sample tire, those not listed in Table 8 are common. The test methods are as follows.

<Noise Performance>

Noise was measured at outside air temperatures of 0°C and 30°C in the same manner as above on a test vehicle on which the sample tires were mounted. The results are indicated as indexes with the noise performance at 30°C being regarded as 100. A lower value indicates that the temperature dependence of noise performance is better.

[Table 8]

|  | Example 24 | Example 25 | Example 26 | Example 27 | Example 28 |
|---|---|---|---|---|---|
| Sound damper | Presence | Presence | Presence | Presence | Presence |
| Length W1 of sound damper | W1<H | W1<H | W1<H | W1<H | W1<H |
| Hardness of cap rubber layer (°) | 65 | 65 | 65 | 65 | 65 |
| Hardness of base rubber layer (°) | 60 | 60 | 60 | 60 | 60 |
| Hardness of inner liner rubber layer (°) | 50 | 50 | 50 | 50 | 50 |
| 0°C tan$\delta$/30°C tan$\delta$ | 4.0 | 3.0 | 2.0 | 1.5 | 1.2 |
| 0°C noise performance (index) | 90 | 100 | 110 | 115 | 120 |
| 30°C noise performance (index) | 100 | 100 | 100 | 100 | 100 |

**Claims**

1. A pneumatic tire (1, 1A) comprising:

    a pair of bead cores (5);
    a carcass layer (6) including a carcass ply (6A, 6B) extending on and between the pair of bead cores (5) through a tread portion (2) and a pair of sidewall portions (3);
    a belt layer (7) disposed outward of the carcass layer (6) in a tire radial direction;
    a tread rubber (2G) disposed outward of the belt layer (7) in the tire radial direction;
    an inner liner rubber layer (10) disposed on a tire inner cavity side of the carcass layer (6); and
    a porous sound damper (20) disposed on the tire inner cavity side of the inner liner rubber layer (10) at the tread portion (2), wherein
    in a region in the tire axial direction where the sound damper (20) is provided, the tread portion (2) includes a plurality of rubber layers (30) each including no cord and stacked in the tire radial direction, and
    as for a hardness of each rubber layer (30), the hardness of the rubber layer (30) located more inward in the tire radial direction is smaller,
    **characterized in that**, in a normal state where the pneumatic tire (1, 1A) is fitted on a normal rim and inflated to a normal internal pressure and no load is applied to the pneumatic tire (1, 1A), a length W1 in a tire axial direction of the sound damper (20) is smaller than a distance H in the tire radial direction from a bead base line to a maximum width position in an inner cavity surface of the sidewall portion (3) and **in that** each of the plurality of rubber layers (30) has a larger thickness than the inner liner rubber layer (10).

2. The pneumatic tire (1, 1A) according to claim 1, wherein the length W1 in the tire axial direction of the sound damper (20) is not greater than 50% of a tread ground-contact width TW.

3. The pneumatic tire (1, 1A) according to claim 2, wherein the length W1 in the tire axial direction of the sound damper (20) is not greater than 40% of the tread ground-contact width TW.

4. The pneumatic tire (1, 1A) according to any one of claims 1 to 3, wherein a hardness Ho of the rubber layer (30) disposed on an outermost side in the tire radial direction among the rubber layers (30) is not less than 105% of a hardness Hi of the rubber layer (30) disposed on an innermost side in the tire radial direction among the rubber layers (30).

5. The pneumatic tire (1, 1A) according to any one of claims 1 to 4, wherein the length W1 in the tire axial direction of the sound damper (20), the tread ground-contact width TW, the hardness Ho of the rubber layer (30) disposed on the outermost side in the tire radial direction among the rubber layers (30), and the hardness Hi of the rubber layer (30) disposed on the innermost side in the tire radial direction among the rubber layers (30) satisfy a relationship of (W1/TW)/(Ho/Hi)≤0.5.

6. The pneumatic tire (1, 1A) according to claim 5, wherein the length W1, the tread ground-contact width TW, the hardness Ho, and the hardness Hi satisfy a relationship of (W1/TW)/(Ho/Hi)≤0.4.

7. The pneumatic tire (1, 1A) according to claim 6, wherein the length W1, the tread ground-contact width TW, the hardness Ho, and the hardness Hi satisfy a relationship of (W1/TW)/(Ho/Hi)≤0.3.

8. The pneumatic tire (1, 1A) according to any one of claims 1 to 7, wherein the length W1 in the tire axial direction of the sound damper (20) is not greater than 150 mm.

9. The pneumatic tire (1, 1A) according to claim 8, wherein the length W1 is not greater than 100 mm.

10. The pneumatic tire (1, 1A) according to any one of claims 1 to 9, wherein a length H1 in the tire radial direction of the sound damper (20) is not greater than 50 mm.

11. The pneumatic tire (1, 1A) according to claim 10, wherein the length H1 is not greater than 30 mm.

12. The pneumatic tire (1, 1A) according to any one of claims 1 to 11, wherein a loss tangent $\tan\delta$ at 0°C and a loss tangent $\tan\delta$ at 30°C of the rubber layer (30) disposed on the outermost side in the tire radial direction among the rubber layers (30) as measured according to the standards of JIS K 6394 at a frequency of 10 Hz, an initial elongation strain of 10 %, and a dynamic strain amplitude of ±2 % using a viscoelasticity spectrometer satisfy a relationship of 0°C $\tan\delta$/30°C $\tan\delta$≤3.

13. The pneumatic tire (1, 1A) according to claim 12, wherein the loss tangent $\tan\delta$ at 0°C and the loss tangent $\tan\delta$ at 30°C satisfy a relationship of 0°C $\tan\delta$/30°C $\tan\delta$≤2.

14. The pneumatic tire (1, 1A) according to any one of claims 1 to 13, wherein

each rubber layer (30) contains a filler component measured as ash by thermogravimetric analysis of a vulcanized rubber according to JIS K 6226-1:2003 and a plasticizer component measured as an acetone extract according to JIS K 6229:2015, and
as for a ratio of a total amount of the filler component to a total amount of the plasticizer component in each rubber layer (30), the ratio in the rubber layer (30) located more inward in the tire radial direction is smaller.

15. The pneumatic tire (1A) according to any one of claims 1 to 14, further comprising a sealant layer (40) for preventing a puncture, on a tire inner cavity surface, wherein
a hardness of the sealant layer (40) is smaller than a hardness of the inner liner rubber layer (10).

**Patentansprüche**

1. Luftreifen (1, 1A), umfassend:

ein Paar Wulstkerne (5);
eine Karkassschicht (6) mit einer Karkasslage (6A, 6B), die sich auf und zwischen dem Paar Wulstkernen (5) durch einen Laufflächenabschnitt (2) und ein Paar Seitenwandabschnitte (3) erstreckt;
eine Gürtelschicht (7), die außen von der Karkassschicht (6) in einer Reifenradialrichtung angeordnet ist;
einen Laufflächengummi (2G), der in der Reifenradialrichtung außen von der Gürtelschicht (7) angeordnet ist;
eine Innerliner-Gummischicht (10), die auf einer Reifeninnenhohlraumseite der Karkassschicht (6) angeordnet ist; und
einen porösen Schalldämpfer (20), der auf der Reifeninnenhohlraumseite der Innerliner-Gummischicht (10) am Laufflächenabschnitt (2) angeordnet ist, wobei
in einem Bereich in der Reifenaxialrichtung, in dem der Schalldämpfer (20) vorgesehen ist, der Laufflächenabschnitt (2) eine Vielzahl von Gummischichten (30) aufweist, die jeweils keinen Kord enthalten und in der Reifenradialrichtung gestapelt sind, und
bezüglich einer Härte jeder Gummischicht (30) die Härte der Gummischicht (30), die in der Reifenradialrichtung weiter innen liegt, geringer ist,
**dadurch gekennzeichnet, dass** in einem normalen Zustand, in dem der Luftreifen (1, 1A) auf eine normale Felge aufgezogen und auf einen normalen Innendruck aufgepumpt ist und keine Last auf den Luftreifen (1, 1A) aufgebracht ist, eine Länge W1 in einer Reifenaxialrichtung des Schalldämpfers (20) kleiner ist als ein Abstand H in der Reifenradialrichtung von einer Wulstbasislinie zu einer Position maximaler Breite in einer inneren Hohlraumfläche des Seitenwandabschnitts (3), und dass jede der Vielzahl von Gummischichten (30) eine größere Dicke als die Innerliner-Gummischicht (10) hat.

2. Luftreifen (1, 1A) nach Anspruch 1, wobei die Länge W1 in der Reifenaxialrichtung des Schalldämpfers (20) nicht größer als 50 % einer Laufflächen-Aufstandsbreite TW ist.

3. Luftreifen (1, 1A) nach Anspruch 2, wobei die Länge W1 in der Reifenaxialrichtung des Schalldämpfers (20) nicht größer als 40% der Laufflächen-Aufstandsbreite TW ist.

4. Luftreifen (1, 1A) nach einem der Ansprüche 1 bis 3, wobei eine Härte Ho der Gummischicht (30), die auf einer Seite am weitesten außen in der Reifenradialrichtung unter den Gummischichten (30) angeordnet ist, nicht weniger als 105% einer Härte Hi der Gummischicht (30) beträgt, die auf einer Seite am weitesten innen in der Reifenradialrichtung unter den Gummischichten (30) angeordnet ist.

5. Luftreifen (1, 1A) nach einem der Ansprüche 1 bis 4, wobei die Länge W1 in der Reifenaxialrichtung des Schalldämpfers (20), die Aufstandsbreite TW der Lauffläche, die Härte Ho der Gummischicht (30), die auf der Seite am weitesten außen in der Reifenradialrichtung unter den Gummischichten (30) angeordnet ist, und die Härte Hi der Gummischicht (30), die auf der Seite am weitesten innen in der Reifenradialrichtung unter den Gummischichten (30) angeordnet ist, eine Beziehung (W1/TW)/(Ho/Hi)≤0,5 erfüllen.

6. Luftreifen (1, 1A) nach Anspruch 5, wobei die Länge W1, die Laufflächen-Aufstandsbreite TW, die Härte Ho und die Härte Hi eine Beziehung (W1/TW)/(Ho/Hi)≤0,4 erfüllen.

7. Luftreifen (1, 1A) nach Anspruch 6, wobei die Länge W1, die Laufflächen-Aufstandsbreite TW, die Härte Ho und die Härte Hi eine Beziehung (W1/TW)/(Ho/Hi)≤0,3 erfüllen.

8. Luftreifen (1, 1A) nach einem der Ansprüche 1 bis 7, wobei die Länge W1 in der Reifenaxialrichtung des Schalldämpfers (20) nicht größer als 150 mm ist.

9. Luftreifen (1, 1A) nach Anspruch 8, wobei die Länge W1 nicht größer als 100 mm ist.

10. Luftreifen (1, 1A) nach einem der Ansprüche 1 bis 9, wobei eine Länge H1 in der Reifenradialrichtung des Schalldämpfers (20) nicht größer als 50 mm ist.

11. Luftreifen (1, 1A) nach Anspruch 10, wobei die Länge H1 nicht größer als 30 mm ist.

12. Luftreifen (1, 1A) nach einem der Ansprüche 1 bis 11, wobei ein Verlusttangens tanδ bei 0°C und ein Verlusttangens tanδ bei 30°C der Gummischicht (30), die auf der Seite am weitesten außen in der Reifenradialrichtung unter den Gummischichten (30) angeordnet ist, wie gemäß den Standards von JIS K 6394 bei einer Frequenz von 10 Hz, einer anfänglichen Längungsdehnung von 10 % und einer dynamischen Dehnungsamplitude von ±2 % unter Verwendung eines Viskoelastizitätsspektrometers gemessen, eine Beziehung 0°C tanδ/30°C tanδ≤3 erfüllen.

13. Luftreifen (1, 1A) nach Anspruch 12, wobei der Verlusttangens tanδ bei 0°C und der Verlusttangens tanδ bei 30°C eine Beziehung 0°C tanδ/30°C tanδ≤2 erfüllen.

14. Luftreifen (1, 1A) nach einem der Ansprüche 1 bis 13, wobei

jede Gummischicht (30) eine Füllstoffkomponente, gemessen als Asche durch thermogravimetrische Analyse eines vulkanisierten Gummis gemäß JIS K 6226-1:2003, und eine Weichmacherkomponente, gemessen als Acetonextrakt gemäß JIS K 6229:2015, enthält, und
bezüglich eines Verhältnisses einer Gesamtmenge der Füllstoffkomponente zu einer Gesamtmenge der Weichmacherkomponente in jeder Gummischicht (30), das Verhältnis in der Gummischicht (30), die in der Reifenradialrichtung weiter innen liegt, kleiner ist.

15. Luftreifen (1A) nach einem der Ansprüche 1 bis 14, der ferner eine Dichtungsmitttelschicht (40) zur Verhinderung einer Reifenpanne auf einer Reifeninnenfläche aufweist, wobei
eine Härte der Dichtungsmittelschicht (40) kleiner ist als eine Härte der Innerliner-Gummischicht (10).

**Revendications**

1.  Bandage pneumatique (1, 1A) comprenant :

    une paire d'âmes de talon (5) ;
    une couche de carcasse (6) incluant une nappe de carcasse (6A, 6B) s'étendant sur et entre la paire d'âmes de talon (5) à travers une portion formant bande de roulement (2) et une paire de portions formant parois latérales (3) ;
    une couche de ceinture (7) disposée à l'extérieur de la couche de carcasse (6) dans une direction radiale du pneumatique ;
    un caoutchouc de bande de roulement (2G) disposé à l'extérieur de la couche de ceinture (7) dans la direction radiale du pneumatique ;
    une couche de caoutchouc de doublage intérieur (10) disposée sur un côté de cavité intérieure du pneumatique de la couche de carcasse (6) ; et
    un amortisseur sonore poreux (20) disposé sur le côté de la cavité intérieure du pneumatique de la couche de caoutchouc de doublage intérieur (10) au niveau de la portion formant bande de roulement (2), dans lequel
    dans une région dans la direction axiale du pneumatique où l'amortisseur sonore (20) est prévu, la portion formant bande de roulement (2) inclut une pluralité de couches de caoutchouc (30) n'incluant chacune aucun câblé et empilées dans la direction radiale du pneumatique, et
    à titre de dureté de chaque couche de caoutchouc (30), la dureté de la couche de caoutchouc (30) située plus à l'intérieur dans la direction radiale du pneumatique est plus petite,
    **caractérisé en ce que**
    dans un état normal où le bandage pneumatique (1, 1A) est ajusté sur une jante normale et est gonflé à une pression interne normale et où aucune charge n'est appliquée sur le bandage pneumatique (1, 1A), une longueur W1 dans une direction axiale du pneumatique de l'amortisseur sonore (20) est plus petite qu'une distance H dans la direction radiale du pneumatique depuis une ligne de base de talon jusqu'à une position de largeur maximum dans une surface de cavité intérieure de la portion formant paroi latérale (3), et **en ce que** chacune de la pluralité de couches de caoutchouc (30) a une épaisseur plus grande que la couche de caoutchouc de doublage intérieur (10).

2.  Bandage pneumatique (1, 1A) selon la revendication 1, dans lequel la longueur W1 dans la direction axiale du pneumatique de l'amortisseur sonore (20) n'est pas supérieure à 50 % d'une largeur de contact au sol de bande de roulement TW.

3.  Bandage pneumatique (1, 1A) selon la revendication 2, dans lequel la longueur W1 dans la direction axiale du pneumatique de l'amortisseur sonore (20) n'est pas supérieure à 40 % d'une largeur de contact au sol de bande de roulement TW.

4.  Bandage pneumatique (1, 1A) selon l'une quelconque des revendications 1 à 3, dans lequel une dureté Ho de la couche de caoutchouc (30) disposée sur un côté le plus à l'extérieur dans la direction radiale du pneumatique parmi les couches de caoutchouc (30) n'est pas inférieure à 105 % d'une dureté Hi de la couche de caoutchouc (30) disposée sur un côté le plus à l'intérieur dans la direction radiale du pneumatique parmi les couches de caoutchouc (30).

5.  Bandage pneumatique (1, 1A) selon l'une quelconque des revendications 1 à 4, dans lequel la longueur W1 dans la direction axiale du pneumatique de l'amortisseur sonore (20), la largeur de contact au sol de bande de roulement TW, la dureté Ho de la couche de caoutchouc (30) disposée sur le côté le plus à l'extérieur dans la direction radiale du pneumatique parmi les couches de caoutchouc (30), et la dureté Hi de la couche de caoutchouc (30) disposé sur le côté le plus à l'intérieur dans la direction radiale du pneumatique parmi les couches de caoutchouc (30) satisfont une relation telle que $(W1/TW)/(Ho/Hi) \leq 0,5$.

6.  Bandage pneumatique (1, 1A) selon la revendication 5, dans lequel la longueur W1, la largeur de contact au sol de bande de roulement TW, la dureté Ho et la dureté Hi satisfont une relation telle que $(W1/TW)/(Ho/Hi) \leq 0,4$.

7.  Bandage pneumatique (1, 1A) selon la revendication 6, dans lequel la longueur W1, la largeur de contact au sol de bande de roulement TW, la dureté Ho, et la dureté Hi satisfont une relation telle que $(W1/TW)/(Ho/Hi) \leq 0,3$.

8.  Bandage pneumatique (1, 1A) selon l'une quelconque des revendications 1 à 7, dans lequel la longueur W1 dans la direction axiale du pneumatique de l'amortisseur sonore (20) n'est pas supérieure à 150 mm.

9. Bandage pneumatique (1, 1A) selon la revendication 8, dans lequel la longueur W1 n'est pas supérieure à 100 mm.

10. Bandage pneumatique (1, 1A) selon l'une quelconque des revendications 1 à 9, dans lequel une hauteur H1 dans la direction radiale du pneumatique de l'amortisseur sonore (20) n'est pas supérieure à 50 mm.

11. Bandage pneumatique (1, 1A) selon la revendication 10, dans lequel la hauteur n'est pas supérieure à 30 mm.

12. Bandage pneumatique (1, 1A) selon l'une quelconque des revendications 1 à 11, dans lequel une tangente de perte tan$\delta$ à 0 °C et une tangente de perte tan$\delta$ à 30 °C de la couche de caoutchouc (30) disposée sur le côté le plus à l'extérieur dans la direction radiale du pneumatique parmi les couches de caoutchouc (30), telles que mesurées selon les standards de la norme industrielle japonaise JIS K 6394 à une fréquence de 10 Hz, une contrainte d'allongement initiale de 10 %, et une amplitude de contrainte dynamique de ± 2 % en utilisant un spectromètre de viscoélasticité satisfont une relation de 0°C tan$\delta$/30 °C tan$\delta \le$ 3.

13. Bandage pneumatique (1, 1A) selon la revendication 12, dans lequel la tangente de perte tan$\delta$ à 0 °C et la tangente de perte tan$\delta$ à 30 °C satisfont une relation de 0 °C tan$\delta$/30 °C tan$\delta \le$ 2.

14. Bandage pneumatique (1, 1A) selon l'une quelconque des revendications 1 à 13, dans lequel

chaque couche de caoutchouc (30) contient un composant de remplissage mesuré à titre de cendre par analyse thermogravimétrique d'un caoutchouc vulcanisé selon JIS K 6226-1:2003 et un composant plastifiant mesuré à titre d'extrait d'acétone selon JIS K 6229:2015, et
à titre de rapport d'une quantité totale du composant de remplissage sur une quantité totale du composant plastifiant dans chaque couche de caoutchouc (30), le rapport dans la couche de caoutchouc (30) située plus à l'intérieur dans la direction radiale du pneumatique est plus petit.

15. Bandage pneumatique (1, 1A) selon l'une quelconque des revendications 1 à 14, comprenant en outre une couche de scellement (40) destinée à empêcher une crevaison, sur une surface de cavité intérieure du pneumatique, dans lequel
une dureté de la couche de scellement (40) est inférieure à une dureté de la couche de caoutchouc de doublage intérieur (10).

## Fig. 1

**Fig. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005262920 A
- EP 3663102 A1
- WO 2019221874 A1
- WO 2018094026 A1